# FASCICULE DE BREVET EUROPEEN

(11) **EP 1 539 459 B1**
(45) Date de publication et mention de la délivrance du brevet: **04.03.2015**
(21) Numéro de dépôt: 03792449.5
(22) Date de dépôt: 20.08.2003
(51) Int. Cl.: B29C 49/56, B29C 49/06, B29C 49/36, B29C 49/42

(54) **DISPOSITIF DE MOULAGE, PAR SOUFFLAGE OU ETIRAGE SOUFFLAGE, DE RECIPIENTS EN MATERIAU THERMOPLASTIQUE**
VORRICHTUNG ZUM BLASFORMEN ODER STRECKBLASFORMEN VON THERMOPLASTISCHEN BEHÄLTERN
DEVICE FOR BLOW MOULDING OR BLOW DRAWING OF THERMOPLASTIC CONTAINERS

(30) Priorité: 22.08.2002 FR 0210486
(43) Date de publication de la demande: 15.06.2005
(73) Titulaire: SIDEL PARTICIPATIONS, 76930 Octeville-sur-Mer (FR)
(72) Inventeur: ARAKELYAN, Vigen, c/o Sidel, 76930 Octeville sur Mer (FR); ROUSSEAU, Nicolas, Marc, Alexandre, c/o sidel, 76930 Octeville sur Mer (FR); BRACHET, Vincent, c/o sidel, 76930 Octeville sur Mer (FR); LANGLOIS, Pierre-François, c/o sidel, 76930 Octeville sur Mer (FR)
(74) Mandataire: Cabinet Plasseraud
(86) Numéro de dépôt international: PCT/FR2003/002555
(87) Numéro de publication internationale: WO 2004/018181

(56) Documents cités:
- FR-A- 2 737 436
- GB-A- 2 225 274
- US-A- 5 346 386

## Description

La présente invention concerne des perfectionnements apportés aux dispositifs de moulage, par soufflage ou étirage-soufflage, de récipients, tels que des bouteilles, flacons, etc ..., à partir de préformes en matériau thermoplastique, ce dispositif de moulage étant mobile, notamment rotatif, et comportant :
- au moins un moule de type porte-feuilles présentant deux demi-moules raccordés l'un à l'autre par un axe de pivotement mutuel,
- deux biellettes solidarisées l'une à l'autre, par une première articulation, à l'une de leurs extrémités et solidarisées avec articulation, à leur autre extrémité, respectivement aux deux demi-moules de part et d'autre dudit axe de pivotement mutuel,
- et des moyens d'actionnement qui sont connectés à ladite première articulation et qui comprennent au moins un galet suiveur propre à coopérer avec au moins une came fixe respective de manière à provoquer un déplacement approximativement linéaire de ladite articulation en direction du moule ou en éloignement de celui-ci s'accompagnant respectivement de la fermeture ou de l'ouverture du moule.

Des dispositifs de moulage à moule porte-feuilles sont décrits par exemple dans les documents FR-A-2 646 802, FR-A-2 653 058 et FR-A-2 737 436, tous au nom de la Demanderesse.

Le document FR-A-2 737 436 décrit un dispositif de moulage conformément an préambule de la revendication 1.

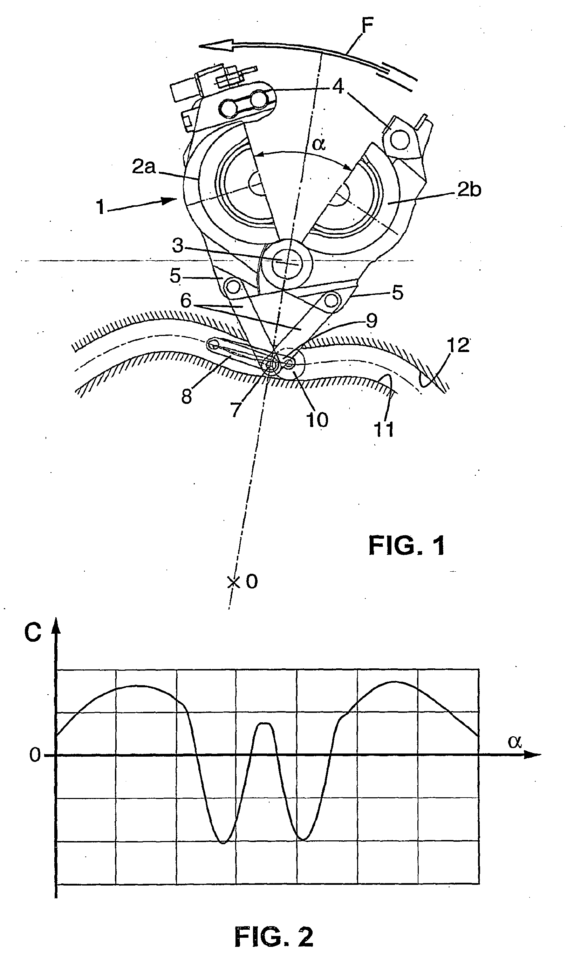

A la figure 1 des dessins annexés est illustrée schématiquement, en vue de dessus, une structure actuelle d'un dispositif de moulage visé par l'invention. Le dispositif de moulage peut être du type rotatif avec un bâti mobile ou carrousel (non montré) tournant (flèche F) autour d'un axe O, un tel dispositif pouvant comporter une multiplicité de moules répartis angulairement sur le pourtour du bâti tournant (un seul moule étant montré).

Le dispositif de moulage comporte donc au moins un moule 1 (ayant toute structure appropriée) du type porte-feuilles présentant deux demi-moules 2a, 2b, montés pivotant sur un axe 3 commun pour être rotatifs l'un par rapport à l'autre. Les demi-moules sont équipés d'organes de verrouillage 4 propres à les verrouiller l'un à l'autre en position de fermeture.

Les demi-moules 2a, 2b, sont équipés d'oreilles extérieures 5 respectives, écartées de leur axe 3 de pivotement, sur lesquelles sont raccordées à pivotement les extrémités respectives de deux biellettes 6 dont les autres extrémités sont raccordées à libre pivotement sur un axe commun d'articulation 7.

Selon que l'axe commun d'articulation 7 est déplacé approximativement linéairement dans un sens le rapprochant de l'axe de pivotement 3 ou au contraire l'en éloignant, on provoque le rapprochement l'un de l'autre des demi-moules et donc la fermeture du moule, ou au contraire respectivement l'éloignement des demi-moules l'un de l'autre et donc l'ouverture du moule.

Pour commander ce mouvement de l'axe commun d'articulation 7, on a en général recours à des moyens d'entraînement à came/galet avec interposition de moyens à levier formant amplificateur de course. A cette fin, on peut avoir recours au mode de réalisation illustré à la figure 1 selon lequel l'axe commun d'articulation 7 est solidaire de l'extrémité d'un bras de commande 8 dont l'autre extrémité est solidarisée, par un axe, à une bielle 9 dont l'extrémité libre supporte des moyens suiveurs propres à coopérer avec des moyens de guidage montés sur la structure fixe du dispositif de moulage.

Classiquement, les moyens de guidage sont des moyens à came profilée longitudinalement.

Toujours classiquement alors, les moyens de guidage comprennent deux cames profilées, l'une intérieure 11 et l'autre extérieure 12 (considérées par rapport au centre de rotation O), qui sont approximativement parallèles l'une à l'autre selon le profil longitudinal requis.

Lors de la rotation du bâti tournant qui porte le moule 1, les moyens suiveurs entrent en contact avec les cames 11, 12 qui, de par leurs profils, assurent les déplacements des biellettes 6, et donc l'ouverture et la fermeture du moule en fonction du déplacement angulaire du bâti tournant.

La mise en oeuvre de deux cames approximativement parallèles et tournées en direction l'une de l'autre permet d'assurer en permanence un appui positif des moyens suiveurs, sélectivement selon le sens du déplacement à commander pour l'ouverture et pour la fermeture du moule.

Pendant un cycle d'ouverture et de fermeture, le couple résultant des forces d'inertie qui est exercé sur la bielle 9 de commande est variable. II change de valeur, de direction et de sens selon le sens du déplacement à commander : le graphique de la figure 2 représente, dans un dispositif typique, la variation (en ordonnées) du couple C résultant des forces d'inertie (pour une cadence donnée - ici 1.500 bouteilles/heure) en fonction (en abscisses) de la position des moyens suiveurs le long des cames (et donc de l'angle α d'ouverture ou de fermeture du moule).

Or, il est impératif que les moyens suiveurs restent en permanence au contact de la came de guidage requise de manière à éliminer les chocs qui, sinon, seraient engendrés par les moyens suiveurs oscillant entre les deux cames intérieure et extérieure.

Au surplus, il est classique que, pour réduire au maximum les frottements, les moyens suiveurs soient constitués sous forme d'un galet fou. Or, dans la configuration à deux cames de guidage en vis-à-vis envisagées plus haut, il n'est pas possible de mettre en oeuvre un galet unique qui devrait changer d'appui en un temps très bref d'une came à l'autre avec l'inversion corrélative de son sens de rotation. En pratique, on a donc recours à deux galets 10 coaxiaux, superposés et indépendants (un seul galet étant visible sur la figure 1) qui coopérent respectivement avec les deux cames 11, 12 qui sont décalées verticalement l'une par rapport à l'autre. Un tel agencement complique le dispositif et en accroît le coût.

De plus, lorsqu'un galet, jusqu'alors inactif, entre en contact avec la came correspondante, il ne possède pas la vitesse de rotation requise : soit il ne tourne pas, soit il tourne à une vitesse moindre résultant de l'amortissement de la rotation acquise lors d'un entraînement précédent.

Cette venue en contact génère donc un choc s'accompagnant d'un phénomène de rebond. Il en résulte une oscillation du couple autour de la valeur O comme cela apparaît à la figure 2. L'importance de ces oscillations et des vibrations qu'elles provoquent dans l'ensemble de la machine s'accroît avec la vitesse relative des galets et des cames, autrement dit avec la vitesse de fonctionnement de la machine.

Pour éviter que ces chocs et vibrations entraînent un fonctionnement défectueux de la machine et/ou endommagent la machine, il est nécessaire de limiter la vitesse de celle-ci, et donc de limiter la cadence de production.

Au surplus, et tout en restant dans les limites de fonctionnement acceptables de la machine, on a recours à une came supplémentaire (non montrée sur la figure 1), qui est articulée et qui, en fin de course de fermeture du moule, vient forcer sur la bielle 9 de commande afin de rattraper les jeux et assurer un verrouillage correct des demi-moules malgré les variations des efforts générés par les galets.

Or il existe présentement une demande pressante, de la part des utilisateurs des machines de fabrication de récipients, et notamment de bouteilles, en matière thermoplastique par soufflage ou étirage-soufflage, pour un accroissement sensible des cadences de production, ce qui implique notamment une augmentation sensible de la vitesse de fonctionnement des dispositifs de moulage, augmentation de vitesse que les dispositifs actuels ne sont pas en mesure de supporter pour les raisons exposées plus haut.

Le but de l'invention est donc de proposer une structure perfectionnée des dispositifs de moulage qui permette d'accroître sensiblement la vitesse de fonctionnement de ceux-ci et qui, dans toute la mesure du possible, puisse être plus simple et moins coûteuse (à la construction et à l'entretien) que les machines actuelles.

A ces fins, un dispositif de moulage tel qu'exposé au préambule se caractérise, étant agencé conformément à l'invention, par les dispositions enoncées dans la partie caracterisante de la revendication 1.

En outre, il est avantageux que l'extrémité fixe du ressort soit en appui contre une pièce déplaçable aux fins de réglage de la précontrainte du ressort.

Grâce à la mise en oeuvre de moyens compensateurs tels qu'exposés plus haut, on compense de façon notable l'effet des forces d'inertie, notamment en atténuant la variation d'amplitude de leur résultante et surtout, en rendant invariant le sens de cette résultante. Autrement dit, le galet demeure en permanence en contact avec la came de guidage, et cela quel que soit le sens du déplacement à commander pour l'axe 7; de plus les jeux -n'ont à être rattrapés que-dans un sens, toujours le même.

Il en résulte la possibilité de reproduire de façon précise le mouvement de la commande requise, et d'éviter les chocs et vibrations dont il a été question plus haut pour les machines actuelles.

Du point de vue de la structure du dispositif de moulage, les avantages procurés par la mise en oeuvre des moyens compensateurs sont considérables car il devient possible de supprimer l'une des deux cames et le galet associé qui sont devenus inutiles. Au surplus, la came supplémentaire peut elle aussi être supprimée car devenue inutile du fait que les moyens compensateurs absorbent l'énergie cinétique en fin de fermeture des moules.

La suppression des éléments précités permet de libérer de l'espace dans la partie centrale du dispositif de moulage, par ailleurs fort encombrée.

La solution proposée par l'invention peut être mise en oeuvre sans modification profonde des machines et, surtout, elle peut être mise en oeuvre sur des machines déjà existantes.

Au total, la solution perfectionnée conforme à l'invention permet d'augmenter significativement la cadence des dispositifs de moulage, et donc de l'ensemble de l'installation de fabrication de récipients, de réduire le coût des machines et d'améliorer la dynamique du fonctionnement des machines grâce à l'élimination des chocs sur la came de commande.

L'invention sera mieux comprise à la lecture de la description détaillée qui suit d'un mode de réalisation préféré donné uniquement à titre d'exemple nullement limitatif. Dans cette description on se réfère aux dessins annexés sur lesquels :
- la fig. 3 est une vue de dessus d'un moule, agencé conformément à l'invention, montré dans la même position que celui de la fig. 1 ;
- la fig. 4 est une vue de côté et en perspective du moule de la fig. 3 ;
- la fig. 5 est une vue en coupe d'une partie du moule des fig. 3 et 5 ; et
- la fig. 6 est un graphique illustrant le fonctionnement du moule de la fig. 3.

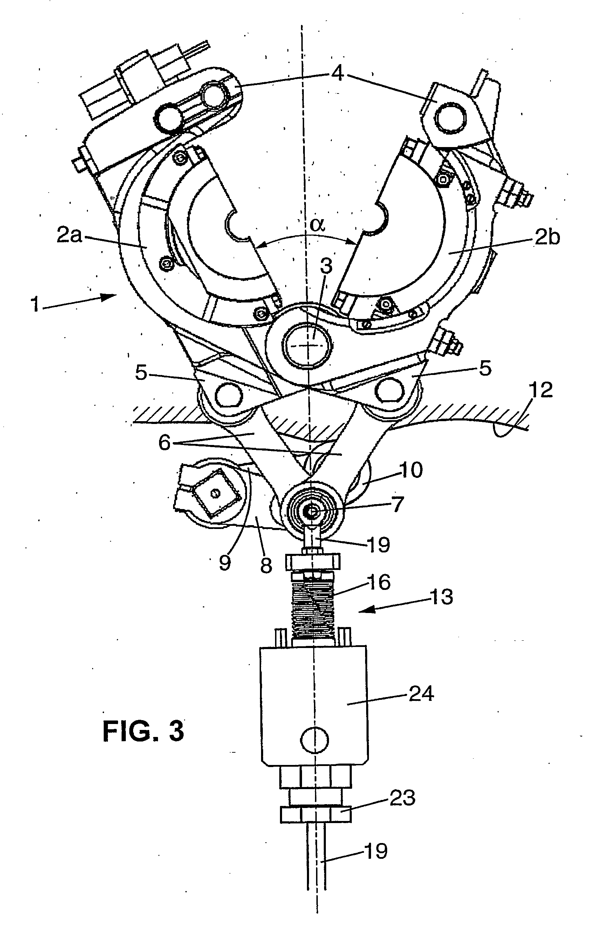

En se reportant tout d'abord à la figure 3, le moule 1 est montré dans la même situation qu'à la figure 1 et les mêmes références numériques ont été conservées pour désigner les mêmes organes.

Conformément à l'invention, on associe à l'articulation 7 commune aux deux biellettes 6 des moyens compensateurs 13 propres à agir de manière telle que le galet suiveur 10 soit maintenu en permanence au contact de la came.

Dans le mode de réalisation illustré à la figure 3, l'agencement est prévu pour que le galet 10 soit maintenu au contact de la came extérieure 12, c'est-à-dire contre la came dont la surface est tournée vers le centre de rotation O. On remarquera que, dans ce cas, les forces centrifuges agissent dans un sens tendant à plaquer le galet 10 contre la came 12, ce qui facilite le maintien, par les moyens compensateurs 13, du galet en permanence contre la came.

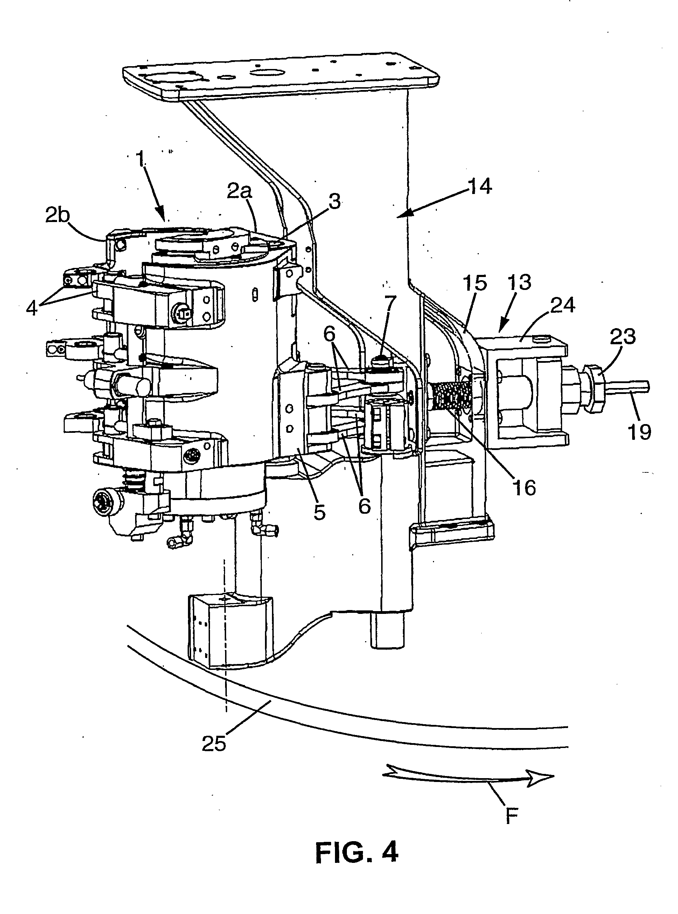

La figure 4 donne une représentation d'ensemble du moule 1, en vue de côté en perspective, cette vue faisant apparaître la console 14 supportant le moule sur le bâti tournant 25 (par exemple en forme de plateau tournant) mais ne montrant par contre ni le galet, ni la came associée. Les moyens compensateurs 13 sont fixés sur un montant 15 de la console 14, en arrière de l'axe 7 auquel ils sont raccordés.

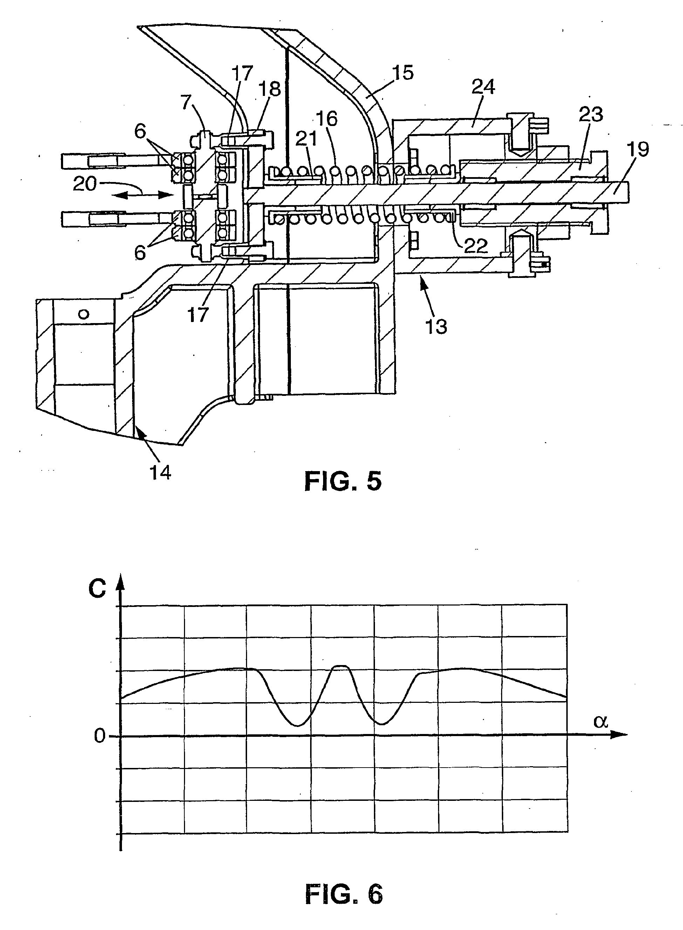

A la figure 5 sont illustrés, en coupe, les moyens compensateurs 13, qui sont constitués sous forme d'un ressort en hélice 16 maintenu comprimé entre un support de l'axe 7 et un ancrage fixe solidaire du montant 15.

Dans l'exemple concret de réalisation montré à la figure 5, les extrémités de l'axe 7 tourillonnent dans des paliers respectifs prévus dans des bras 17 d'un support 18.

Au support 18 est solidarisée une tige 19 de guidage qui s'étend selon la direction des déplacements de l'axe 7 (flèche 20).

Le ressort 16 entoure coaxialement la tige 19. Par une de ses extrémités, il prend appui sur une virole 21 emmanchée sur la tige 19 et appuyée contre le support 18. Par son extrémité opposée, le ressort 16 prend appui sur une virole 22 emmanchée à libre coulissement sur la tige 19 et en appui contre une douille de guidage 23, elle-même traversée à libre coulissement par la tige 19.

Pour autoriser un réglage de la précontrainte du ressort 16, la douille de guidage 23 est montée de manière à pouvoir être déplacée axialement (par exemple par vissage) dans une platine de support 24, elle-même solidarisée au montant 16 de la console 14.

Grâce à un choix approprié de l'effort de rappel exercé par le ressort 16, le galet 10 est maintenu en permanence en appui positif contre la came extérieure 12.

Les moyens ainsi mis en oeuvre conformément à l'invention ne permettent pas, certes, d'empêcher des variations du couplé résultant des forces d'inertie. Toutefois, comme on peut l'observer sur le graphique de la figure 6 par comparaison avec celui de la figure 2 (les deux graphiques utilisant les mêmes échelles), l'amplitude des variations du couple C est notablement atténuée et, surtout, ce couple conserve toujours le même signe, traduisant ainsi l'absence de décollement du galet.

Un résultat analogue pourrait être obtenu avec un agencement inversé, c'est-à-dire un galet 10 maintenu en appui en permanence contre la came extérieure 12 sous l'action de moyens compensateurs appropriés faisant appel à un ressort de traction.

De même, on pourrait avoir recours à un agencement dans lequel le galet 10 est maintenu en appui en permanence contre une came intérieure (came 11 à la figure 1) sous l'action de moyens compensateurs appropriés, faisant appel à un ressort de traction ou un ressort de compression selon la configuration retenue.

## Revendications

1. Dispositif de moulage, par soufflage ou étirage-soufflage de récipients, tels que des bouteilles, flacons, à partir de préformes en matériau thermoplastique, ce dispositif de moulage étant mobile, notamment rotatif, et comportant :
- au moins un moule (1) de type porte-feuilles présentant deux demi-moules (2a, 2b) raccordés l'un à l'autre par un axe (3) de pivotement mutuel,
- deux biellettes (6) solidarisées l'une à l'autre, par une première articulation (7), à l'une de leurs extrémités et solidarisées avec articulation, à leur autre extrémité, respectivement aux deux demi-moules (2a, 2b) de part et d'autre dudit axe de pivotement mutuel,
- et des moyens d'actionnement (8-12) qui sont connectés à ladite première articulation (7) et qui comprennent au moins un galet suiveur (10) propre à coopérer avec au moins une came fixe respective (11, 12) de manière à provoquer un déplacement approximativement linéaire de ladite articulation (7) en direction du moule ou en éloignement de celui-ci s'accompagnant respectivement de la fermeture ou de l'ouverture du moule, **caractérisé en ce qu'**il comprend en outre des moyens compensateurs (13) qui sont associés à ladite première articulation (7) et qui comprennent au moins un ressort (16) interposé entre ladite articulation (7) et un bâti (14, 25) de support du moule de manière telle que ledit au moins un galet suiveur (10) soit maintenu en permanence au contact de la came respective.

2. Dispositif de moulage selon la revendication 1, **caractérisé en ce que** les moyens d'actionnement (8-12) comportent un galet suiveur (10) unique coopérant avec une came fixe (12) unique.

3. Dispositif de moulage selon la revendication 1 ou 2, **caractérisé en ce que** les moyens compensateurs (13) sont propres à plaquer le galet (10) contre une came intérieure (11).

4. Dispositif de moulage selon la revendication 1 ou 2, **caractérisé en ce que** les moyens compensateurs (13) sont propres à plaquer le galet (10) contre une came extérieure (12).

5. Dispositif de moulage selon l'une quelconque des revendications 1 à 4, **caractérisé en ce que** le ressort (16) est un ressort de compression.

6. Dispositif de moulage selon l'une quelconque des revendications 1 à 4, **caractérisé en ce que** le ressort (16) est un ressort de traction.

7. Dispositif de moulage selon l'une quelconque des revendications 1 à 6, **caractérisé en ce que** l'extrémité fixe du ressort (16) est en appui contre une pièce (23) déplaçable aux fins de réglage de la précontrainte du ressort.

## Patentansprüche

1. Vorrichtung zur Formgebung durch Blasformen oder Streckblasformen von Behältern, wie Flaschen, Flakons, aus Vorformlingen aus einem thermoplastischen Material, wobei diese Formgebungsvorrichtung beweglich, insbesondere drehbar ist und Folgendes umfasst:
- mindestens eine Form (1) des Mappentyps, die zwei Formhälften (2a, 2b) aufweist, die durch eine gegenseitige Schwenkachse (3) miteinander verbunden sind,
- zwei Kniehebel (6), die durch ein erstes Gelenk (7) an einem ihrer Ende fest miteinander verbunden sind und mit einer Gelenkverbindung an ihrem anderen Ende jeweils mit den zwei Formhälften (2a, 2b) beiderseits der gegenseitigen Schwenkachse fest verbunden sind,
- und Betätigungsmittel (8 - 12), die an das erste Gelenk (7) gekoppelt sind und die mindestens einen Rollenfolger (10) umfassen, der zum Zusammenwirken mit mindestens einer jeweiligen feststehenden Kurve (11, 12) geeignet ist, um eine ungefähr lineare Verlagerung des Gelenks (7) in der Richtung der Form oder von diesem weg zu bewirken, die von dem Schließen oder dem Öffnen der Form begleitet wird,
**dadurch gekennzeichnet, dass** sie außerdem Ausgleichsmittel (13) umfasst, die mit dem ersten Gelenk (7) in Verbindung stehen und die mindestens eine Feder (16) umfassen, die zwischen dem Gelenk (7) und einem Tragrahmen (14, 25) der Form eingeschoben ist, so dass der mindestens eine Rollenfolger (10) dauerhaft in Kontakt mit der jeweiligen Kurve gehalten wird.

2. Formgebungsvorrichtung nach Anspruch 1, **dadurch gekennzeichnet, dass** die Betätigungsmittel (8 - 12) einen einzigen Rollenfolger (10) umfassen, der mit einer einzigen feststehenden Kurve (12) zusammenwirkt.

3. Formgebungsvorrichtung nach Anspruch 1 oder 2, **dadurch gekennzeichnet, dass** die Ausgleichsmittel (13) dazu geeignet sind, die Rolle (10) gegen eine Innenkurve (11) zu pressen.

4. Formgebungsvorrichtung nach Anspruch 1 oder 2, **dadurch gekennzeichnet, dass** die Ausgleichsmittel (13) dazu geeignet sind, die Rolle (10) gegen eine Außenkurve (12) zu pressen.

5. Formgebungsvorrichtung nach einem der Ansprüche 1 bis 4, **dadurch gekennzeichnet, dass** die Feder (16) eine Druckfeder ist.

6. Formgebungsvorrichtung nach einem der Ansprüche 1 bis 4, **dadurch gekennzeichnet, dass** die Feder (16) eine Zugfeder ist.

7. Formgebungsvorrichtung nach einem der Ansprüche 1 bis 6, **dadurch gekennzeichnet, dass** das feststehende Ende der Feder (16) gegen ein Teil (23) aufliegt, das zur Einstellung der Vorspannung der Feder verlagert werden kann.

## Claims

1. A device for blow-molding or stretch blow-molding of containers, such as bottles, flasks, made from thermoplastic preforms, this molding device being movable, mainly rotatable, and comprising:
- at least one mold (1) of the wallet type having two half-molds (2a, 2b) connected to one another by a mutual pivot shaft (3),
- two link rods (6) secured to one another, by a first articulation (7), at one of their ends and secured with articulation, at their other end, respectively to the two half-molds (2a, 2b) either side of said mutual pivot shaft,
- and actuation means (8-12) that are connected to said first articulation (7) and that comprise at least one cam follower (10) suitable for interacting with at least one respective fixed cam (11, 12) in order to generate an approximately linear movement of said articulation (7) toward the mold or away from the latter, being accompanied respectively by the closure or the opening of the mold,
**characterized in that** it further comprises compensating means (13) which are associated with said articulation (7) and which comprise at least one spring (16) interposed between said articulation (7) and a frame (14, 25) supporting the mold in such a way that said at least one cam follower (10) is permanently kept in contact with the respective cam.

2. The molding device as claimed in claim 1, **characterized in that** the actuation means (8-12) comprise a single cam follower (10) interacting with a single fixed cam (12).

3. The molding device as claimed in claim 1 or 2, **characterized in that** the compensating means (13) are suitable for pressing the follower (10) against an inner cam (11).

4. The molding device as claimed in claim 1 or 2, **characterized in that** the compensating means (13) are suitable for pressing the follower (10) against an outer cam (12).

5. The molding device as claimed in anyone of claims 1 to 4, **characterized in that** the spring (16) is a compression spring.

6. The molding device as claimed in anyone of claims 1 to 4, **characterized in that** the spring (16) is a tension spring.

7. The molding device as claimed in anyone of claims 1 to 6, **characterized in that** the fixed end of the spring (16) presses against a piece (23) that can be moved to adjust the prestress of the spring.
